# EUROPÄISCHE PATENTANMELDUNG

(11) **EP 2 939 723 A1**
(43) Veröffentlichungstag der Anmeldung: **04.11.2015**
(21) Anmeldenummer: 14001529.8
(22) Anmeldetag: 30.04.2014
(51) Int. Cl.: B01D 3/00, B01D 19/00

(54) **Einrichtung zum Einleiten eines fluiden Mediums in einen Behälter**

(71) Anmelder: Linde Aktiengesellschaft, 80331 München (DE)
(72) Erfinder: Moll, Anton, 82399 Raisting (DE); Matten, Christian, 82049 Pullach (DE); Baus, Michael, 82166 Gräfelfing (DE); Schneider, Daniela, 81477 München (DE); Ehrnsperger, Manfred, 81929 München (DE); Haag, Martin, 82515 Wolfratshausen (DE)
(74) Vertreter: Meilinger, Claudia Sabine

(57) **Zusammenfassung**

Die Erfindung betrifft eine Einrichtung zum Einleiten eines fluiden Mediums (M) in einen Behälter (10), mit: einem Behälter (10), der einen Innenraum (I) des Behälters zur Aufnahme des Mediums (M) begrenzt, einer Rohrleitung (100) zum Einleiten des Mediums (M) in den Innenraum (I) des Behälters (10), wobei die Rohrleitung (100) einen im Innenraum (I) des Behälters angeordneten Rohrleitungsabschnitt (101) aufweist, der einen hohlzylindrischen Mantel (102) aufweist, der sich entlang einer Zylinderachse (L) erstreckt und einen Innenraum (I) des Rohrleitungsabschnitts begrenzt, wobei der Mantel (102) an einer nach unten gewandten Unterseite (102a) eine Öffnung (103) zum Einleiten des fluiden Mediums (M) in den Innenraum (I) des Behälters (10) aufweist, wobei jene Öffnung (103) durch zwei entlang der Zylinderachse (L) erstreckte erste Randabschnitte (104) sowie zwei einander gegenüberliegende, bogenförmige zweite Randabschnitte (105) begrenzt wird, wobei jene bogenförmigen zweiten Randabschnitte (105) die beiden ersten Randabschnitte (104) miteinander verbinden. Erfindungsgemäß ist vorgesehen, dass unterhalb der Öffnung (103) ein an dem Mantel (102) festgelegtes, plattenförmiges Prallelement (110) angeordnet ist, so dass aus der Öffnung (103) austretendes, fluides Medium (M) auf das Prallelement (110) auftrifft.

## Beschreibung

Die Erfindung betrifft eine Einrichtung zum Einleiten eines fluiden Mediums in einen Behälter gemäß Anspruch 1.

Eine derartige Einrichtung bzw. Anordnung weist einen Behälter auf, der einen Innenraum des Behälters zur Aufnahme des Mediums definiert, bei dem es sich um einen ein- oder zweiphasigen Stoffstrom handeln kann, also z.B. einen flüssigen oder gasförmigen Stoffstrom oder einen Stoffstrom, der sowohl eine flüssige als auch eine gasförmige Phase aufweist. Weiterhin weist die Einrichtung eine Rohrleitung zum Einleiten des Mediums in den Innenraum des Behälters auf, wobei die Rohrleitung einen im Innenraum des Behälters angeordneten Rohrleitungsabschnitt aufweist, der einen hohlzylindrischen Mantel aufweist, der sich entlang einer Zylinderachse erstreckt. Der Mantel weist - bezogen auf einen bestimmungsgemäß angeordneten Behälter - an einer nach unten gewandten Unterseite eine Öffnung zum Einleiten des fluiden Mediums in den Innenraum des Behälters auf, wobei jene Öffnung durch zwei entlang der Zylinderachse erstreckte erste Randabschnitte des Mantels sowie zwei einander bzw. in Richtung der Zylinderachse gegenüberliegende, bogenförmige zweite Randabschnitte des Mantels begrenzt wird, wobei jene bogenförmigen zweiten Randabschnitte die beiden ersten Randabschnitte miteinander verbinden.

Eine derartige Einrichtung dient dazu, zum einen den gasförmigen Anteil des Mediums möglichst gleichförmig über den freien Querschnitt des Behälters (z.B. Abscheider oder Kolonne) zu verteilen sowie des Weiteren eine Vorabscheidung der flüssigen Phase zu bewerkstelligen.

Hiervon ausgehend liegt der vorliegenden Erfindung die Aufgabe zugrunde, eine solche Einrichtung weiter zu verbessern, und zwar insbesondere derart, dass ein Flüssigkeitssumpf des Behälters vor dem Wiederherausreißen bereits abgeschiedener Flüssigkeit geschützt wird.

Diese Aufgabe wird durch eine Einrichtung mit den Merkmalen des Anspruchs 1 gelöst. Vorteilhafte Ausgestaltungen der Erfindung sind u.a. in den Unteransprüchen angegeben und werden nachfolgend beschrieben.

Gemäß Anspruch 1 ist erfindungsgemäß vorgesehen, dass unterhalb der Öffnung ein an dem Mantel festgelegtes, plattenförmiges Prallelement angeordnet ist, so dass aus der Öffnung austretendes fluides Medium auf das Prallelement auftrifft. Bei dem Prallelement handelt es sich bevorzugt um ein flaches, bevorzugt ebenes sowie bevorzugt rechteckförmiges Element bzw. Blech (so genanntes Prallblech), das besonders bevorzugt in einer horizontalen Ebene liegt.

Das Prallelement lenkt also das einzuleitende Medium, insbesondere die gasförmige Phase, ab und schützt hierbei den Flüssigkeitssumpf vor einer ungehinderten Beaufschlagung mit dem Medium bzw. jener gasförmigen Phase, so dass einem Herausreißen bereits abgeschiedener Flüssigkeit aus dem Sumpf entgegen gewirkt wird.

Ein typischer Abstand von der Mitte bzw. Zylinderachse des Rohrleitungsabschnitts entlang der Vertikalen zum Prallelement beträgt bevorzugt das 0,5-fache bis 2-fache, bevorzugt das 0,6-fache bis 1-fache, am meisten bevorzugt das 0,7-fache bis 0,8-fache des Innendurchmessers des Rohrleitungsabschnitts.

Bevorzugt verlaufen die beiden ersten Randabschnitte zumindest abschnittsweise oder durchgängig parallel zur Zylinderachse. Es ist denkbar, dass die beiden ersten Randabschnitte z.B. eine Stufe aufweisen und insbesondere ansonsten parallel zur Zylinderachse verlaufen.

Vorzugsweise ist weiterhin vorgesehen, dass die beiden zweiten Randabschnitte als Kreisbögen ausgebildet sind, und zwar bevorzugt als Halbkreisbögen, wobei sich bevorzugt jene zweiten Randabschnitte jeweils in einer senkrecht zur Zylinderachse orientierten Erstreckungsebene erstrecken.

In einer Ausführungsform können die beiden ersten Randbereiche z.B. linear (geradlinig) ausgebildet sein und die beiden zweiten Randbereiche halbkreisförmig. Das bedeutet, dass die Öffnung durch Wegnahme einer Mantelhälfte des Mantels im Bereich der Öffnung gebildet wird. Mit anderen Worten bildet die der Öffnung gegenüberliegende Oberseite des Mantels ein Halbrohr. Es ist auch eine Ausführungsform möglich, bei der die Öffnung direkt an einen Deckel angrenzt, der den Rohrleitungsabschnitt fluiddicht an seinem freien Ende verschließt.

Der Behälter kann grundsätzlich beliebig ausgestaltet sein. Insbesondere kann es sich bei dem Behälter um einen stehenden Behälter handeln, dessen Längs- bzw. Zylinderachse entlang der Vertikalen ausgerichtet ist, oder z.B. um einen liegenden Behälter, dessen Längs- bzw. Zylinderachse entlang der Horizontalen ausgerichtet ist.

Gemäß einer Ausführungsform der Erfindung ist weiterhin vorgesehen, dass die Zylinderachse bezogen auf einen bestimmungsgemäß angeordneten Behälter parallel zur Horizontalen verläuft.

Weiterhin ist gemäß einer bevorzugten Ausführungsform der Erfindung vorgesehen, dass das Prallelement entlang der Horizontalen, und zwar insbesondere senkrecht zur Zylinderachse des Mantels, über die Öffnung bzw. den Mantel hinaus ragt. Auf diese Weise kann erreicht werden, dass ein Großteil des aus der Öffnung austretenden Mediums zunächst das Prallelement anströmt und entsprechend abgelenkt wird.

Gemäß einer bevorzugten Ausgestaltung der Erfindung ist vorgesehen, dass das Prallelement über zumindest zwei Wandungen am Mantel festgelegt ist, die jeweils von der Unterseite des Mantels abragen. Vorzugsweise liegen diese beiden Wandung einander in Richtung der Zylinderachse des Mantels gegenüber und verlaufen bevorzugt parallel zueinander. Die Wandungen liegen jeweils vorzugsweise in einer vertikalen Ebene.

Besonders bevorzugt ist im Bereich der Öffnung auf zwei gegenüberliegenden Seiten des Rohrleitungsabschnitts je ein Tropfenabscheider, insbesondere in Form eines Gestricks (z.B. aus Draht), vorgesehen. Bei derartigen Tropfenabscheidern wird die höhere Trägheit von Flüssigkeitstropfen gegenüber der gasförmigen Phase ausgenutzt, indem das zweiphasige Medium (flüssig/gasförmig) so geführt wird, dass die Strömungsrichtung mehrfach geändert wird. Die Flüssigkeitstropfen können diesen Richtungsänderungen nicht folgen, beaufschlagen den Abscheider und setzen sich daher auf dem Abscheider ab.

Bevorzugt beranden das Prallelement, die beiden Wandungen sowie der Mantel bzw. die beiden Rinnen (siehe unten) je eine laterale Öffnung der Einrichtung, wobei jene beiden lateralen Öffnungen einander gegenüberliegen (die Öffnung ist insbesondere zwischen diesen beiden lateralen Öffnungen angeordnet). Die beiden Tropfenabscheider sind dabei bevorzugt jeweils vor einer zugeordneten lateralen Öffnung angeordnet, so dass das Medium durch die beiden Tropfenabscheider zwangsgeführt wird. Die Öffnungen und Tropfenabscheider sind bezüglich einer vertikalen Ebene, die durch die Zylinderachse verläuft, vorzugsweise spiegelbildlich zueinander angeordnet.

Der Vorteil dieser Einspeisung in den Innenraum des Behälters liegt darin, dass Tropfen bereits an dieser Stelle durch die Tropfenabscheider vergrößert werden und somit z.B. an einem darüber liegenden Abscheider besser abgeschieden werden können. Weiterhin wirken die Tropfenabscheider hinsichtlich der flüssigen Phase des Mediums bzw. Stoffstroms als Flüssigkeitsbremse für den kontrollierten Flüssigkeitsablauf nach unten. Es ist jedoch auch möglich, auf einen Tropfenabscheider zu verzichten.

Gemäß einer bevorzugten Ausführungsform der Erfindung ist weiterhin vorgesehen, dass die beiden Tropfenabscheider geneigt zur Vertikalen verlaufen, wobei die beiden Tropfenabscheider jeweils bevorzugt einen spitzen Winkel mit dem Prallelement einschließen, so dass die beiden Tropfenabscheider - ausgehend vom Prallelement - aufeinander zu laufen. Durch diese schräge Raumlage der Tropfenabscheider vergrößert sich die Abströmfläche für die gasförmige Phase, so dass eine verbesserte Anströmung der ggf. darüber liegenden Einbauten resultiert (z.B. kann eine Walzenbildung reduziert werden).

Die Tropfenabscheider bzw. Gestricke können auch über die Abströmflächen bzw. lateralen Öffnungen hinaus nach unten verlängert ausgebildet sein (z. B. ca. 100 mm). Weiterhin können die Gestricke bzw. Tropfenabscheider mit einer umlaufenden, seitlichen Abdeckung versehen sein, die am unteren Rand bevorzugt jeweils zumindest eine Drainageöffnung aufweist oder nach unten hin offen ist, so dass Flüssigkeit nach unten abfließen kann. Hierdurch können Bypass-Gasströme vermieden werden und bei größeren Flüssigkeitsmengen gasströmungsberuhigte Zonen geschaffen werden. Bei geringeren Flüssigkeitsmengen kann auf ein solches "Tieferziehen" der Tropfenabscheider bzw. Gestricke verzichtet werden und an dem Prallelement unter dem jeweiligen Tropfenabscheider bzw. Gestrick eine oder mehrere Drainageöffnungen vorgesehen werden.

Weiterhin ist gemäß einer Ausführungsform der Erfindung besonders bevorzugt je eine Rinne oberhalb der beiden ersten Randabschnitte am Mantel vorgesehen. Diese Rinnen erstrecken sich jeweils parallel zur Zylinderachse. Bevorzugt ist vorgesehen, dass die beiden Rinnen sich jeweils entlang der Zylinderachse über die Öffnung und/oder die beiden Tropfenabscheider hinaus erstrecken.

Die beiden Rinnen stellen bevorzugt oberhalb der Tropfenabscheider eine Verbindung zum Mantel her, so dass Flüssigkeit, die von oben auf den Rohrabschnitt auftrifft, in die Rinnen abfließen, dort gesammelt sowie über die Enden der Rinnen nach unten in den Behälter abfließen kann.

Das Vorsehen derartiger Rinnen ist insbesondere bei hohen Flüssigkeitsbelastungen bzw. bei Vorhandensein von Tropfenabscheidern (insbesondere in Form von Gestricken) vorteilhaft. Es kann aber auch auf die Rinnen verzichtet werden, z.B. bei vorwiegend einphasigem Gasstrom oder bei einem oberhalb des Rohrabschnitts angebrachtem Lamellenabscheider.

Weiterhin ist gemäß einer bevorzugten Ausführungsform der Erfindung vorgesehen, dass ein, zwei oder mehrere plattenförmige erste Leitelemente vorhanden sind, das bzw. die sich jeweils senkrecht zur Zylinderachse erstrecken und von einer der Öffnung zugewandten Oberseite des Prallelementes abgehen und insbesondere durch jene Öffnung in den Innenraum des Rohrleitungsabschnitts bzw. in jene Öffnung hinein stehen. Auf diese Weise wird das Prallelement bzw. die Öffnung in mehrere Segmente unterteilt, die für sich mit dem Stoffstrom bzw. Medium beschickt werden können. Bei lediglich einem ersten Leitelement wird eine Unterteilung in zwei Segmente realisiert, bei zwei ersten Leitelementen demgegenüber eine Unterteilung in drei Segmente etc.

Bevorzugt ist dabei vorgesehen, dass das oder die ersten Leitelemente parallel zu jenen Wandungen sowie zwischen jenen Wandungen verlaufen sowie insbesondere senkrecht zu dem Prallelement. Die Wandungen begrenzen also die äußeren Segmente in Richtung der Zylinderachse nach außen hin.

Gemäß einer bevorzugten Ausführungsform der Erfindung sind nun weiterhin im Innenraum des Rohrleitungsabschnitts ein, zwei oder mehrere plattenförmige zweite Leitelemente vorgesehen, die sich jeweils flächig entlang einer horizontalen Erstreckungsebene erstrecken und dabei bevorzugt übereinander angeordnet sind.

Alternativ oder ergänzend hierzu sind gemäß einer weiteren Ausführungsform im Innenraum des Rohrleitungsabschnitts ein, zwei oder mehrere plattenförmige zweite Leitelemente vorgesehen, die sich jeweils flächig entlang einer vertikalen Erstreckungsebene erstrecken sowie parallel zur Zylinderachse.

In beiden Ausführungsformen sind die ersten und zweiten Leitelemente, die bevorzugt jeweils als Leitbleche ausgebildet sind, vorzugsweise so konfiguriert, dass der in den Rohrleitungsabschnitt eintretende Stoffstrom auf die einzelnen Segmente der Öffnung bzw. des Prallelementes aufgeteilt wird. Die Leitelemente stellen also verschiedene Strömungspfade bereit, die zu den einzelnen Segmenten führen.

Weitere Vorteile und Merkmale der Erfindung sollen bei den nachfolgenden Figurenbeschreibungen von Ausführungsbeispielen der Erfindung anhand der Figuren erläutert werden. Es zeigen:
- Fig. 1: eine schematische, perspektivische Ansicht einer erfindungsgemäßen Einrichtung;
- Fig. 2: eine schematische Seitenansicht der Einrichtung gemäß Figur 1;
- Fig. 3: eine schematische Draufsicht der Einrichtung gemäß Figuren 1 und 2;
- Fig. 4: eine schematische Vorderansicht der Einrichtung gemäß Figuren 1 bis 3; und
- Fig. 5: eine schematische, perspektivische Ansicht einer weiteren erfindungsgemäßen Einrichtung.

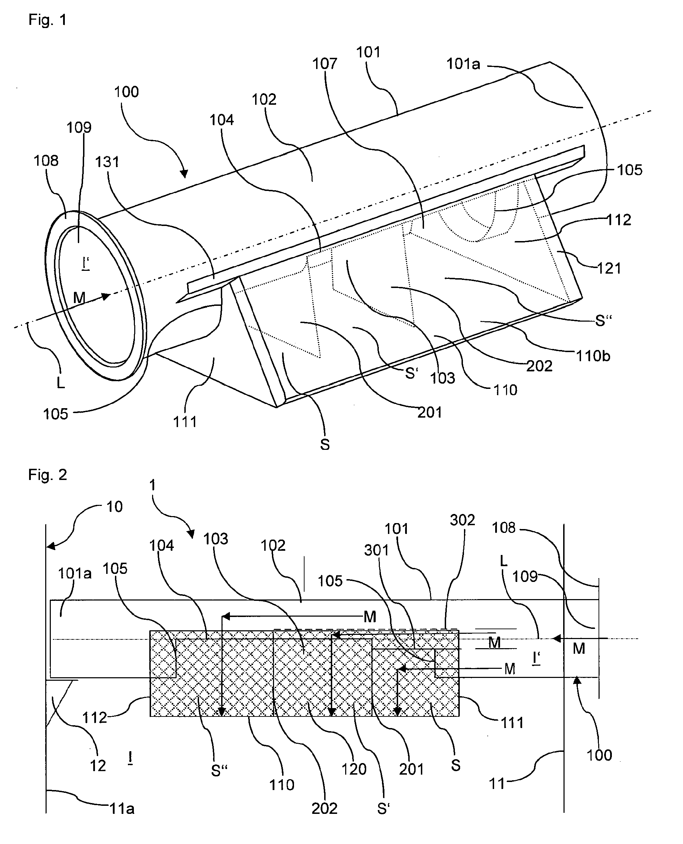

Figur 1 zeigt im Zusammenhang mit den Figuren 2 bis 4 eine erfindungsgemäße Einrichtung 1 zum Einleiten eines fluiden Mediums M in einen Behälter 10. Der Behälter 10 weist einen Mantel 11 auf, der einen Innenraum I des Behälters 10 begrenzt, wobei der Mantel 11 eine dem Innenraum I zugewandte Innenseite 11a aufweist. Bei dem Behälter 10 kann es sich um einen stehenden Behälter 10 handeln, dessen Längs- bzw. Zylinderachse entlang der Vertikalen ausgerichtet ist, oder aber auch um einen liegenden Behälter 10, dessen Längs- bzw. Zylinderachse entlang der Horizontalen ausgerichtet ist. Zum Einleiten des fluiden Mediums M (z.B. in Form eines zweiphasigen flüssig-gasförmigen Stoffstromes) in den Innenraum I des Behälters 10 ist eine Rohrleitung 100 vorgesehen, die mit einem Rohrleitungsabschnitt 101 durch den Mantel 11 hindurch in den Innenraum I des Behälters 10 geführt ist. Das freie Ende 101a des Rohrleitungsabschnitts 101 liegt dabei auf einem Lager 12 auf, das z.B. an der Innenseite 11a des Behältermantels 11 festgelegt ist. Anstelle des Lagers 12 kann auch eine andere Befestigung/Lagerung des Rohrleitungsabschnitts 101 im bzw. am Behälter 10 vorgesehen werden.

Zum Anschließen einer weiteren Rohrleitung für die Zuführung des fluiden Mediums M kann die Rohrleitung 100 einen Flansch 108 aufweisen. Der Flansch 108 kann dabei außerhalb des Behälters 10 bzw. des Innenraumes I des Behälters 10 angeordnet sein. Alternativ hierzu kann der Flansch 108 auch im Innenraum I des Behälters 10 angeordnet sein. Die besagte weitere Rohrleitung ist dann in den Innenraum I des Behälters 10 geführt und dort mit der Rohrleitung 100 bzw. dem Rohrleitungsabschnitt 101 verbunden.

Der Rohrleitungsabschnitt 101 weist einen hohlzylindrischen Mantel 102 auf, der sich entlang einer Zylinderachse L erstreckt, die parallel zur Horizontalen verläuft. Der Mantel 102 begrenzt einen insbesondere kreiszylindrischen Innenraum I` des Rohrleitungsabschnitts 101 und ist am freien Ende 101a des Rohrleitungsabschnitts 101 fluiddicht mit einem Deckel verschlossen.

Zum Abströmen des fluiden Mediums M in den Innenraum I des Behälters 10 weist der Mantel 102 an einer entlang der Vertikalen nach unten gewandten Unterseite 102a des Mantels 102 eine Öffnung 103 auf, so dass die der Öffnung 103 gegenüberliegende Oberseite 102b des Mantels 102 als Halbrohr bzw. im Wesentlichen als Halbrohr ausgebildet ist. Der Öffnungswinkel bzw. Mittelpunktswinkel der Öffnung 103 beträgt daher bevorzugt 180°. Der Öffnungswinkel kann jedoch hiervon abweichende Werte aufweisen bzw. entlang der Öffnung 103 variieren. Die Öffnung 103 wird entsprechend durch zwei im Wesentlichen parallel zur Zylinderachse L verlaufende erste, geradlinige Randabschnitte 104 des Mantels 102 begrenzt sowie durch zwei im Wesentlichen halbkreisförmige zweite Randabschnitte 105 des Mantels 102, die sich jeweils in einer quer zur Zylinderachse L orientierten Ebene erstrecken und die beiden ersten Randabschnitte 104 miteinander verbinden. Ggf. können die ersten Randabschnitte 104 auch eine oder mehrere Stufen aufweisen.

Zum Schutz eines unterhalb des Rohrleitungsabschnitts 101 gelegenen Flüssigkeitssumpfes des Behälters 10 ist in Richtung der Vertikalen unterhalb der Öffnung 103 ein an dem Mantel 102 befestigtes, ebenes, plattenförmiges Prallelement bzw. Prallblech 110 vorgesehen, so dass aus der Öffnung 103 austretendes, fluides Medium M das Prallelement 110 anströmt und daher nicht direkt auf den Sumpf einwirken kann. Um diese Wirkung zu vergrößern, ist vorgesehen, dass sich das Prallelement 110 auf der gesamten Länge der Öffnung 103 entlang der Zylinderachse L entlang der Horizontalen sowie senkrecht zur Zylinderachse L über die Öffnung 103 bzw. Mantel 102 hinaus erstreckt.

Zum Festlegen des in einer horizontalen Ebene liegenden Prallelementes 110 sind zwei einander in Richtung der Zylinderachse gegenüberliegende sowie parallel zueinander erstreckte Wandungen 111, 112 vorgesehen, die vom Mantel 102 abragen und sich vom Mantel 102 ausgehend in Richtung auf das Prallelement 110 verbreitern. Die beiden Wandungen 111, 112 sind z.B. einstückig oder durch eine sonstige Verbindung (z.B. Schweißverbindung) mit je einem Randbereich des Prallelementes 110 verbunden, so dass das Prallelement 110 beabstandet zur Öffnung 103 der Öffnung 103 in Richtung der Vertikalen gegenüberliegt.

Zum Sammeln einer von oben auf den Rohrleitungsabschnitt 101 herabströmenden flüssigen Phase ist des Weiteren jeweils oberhalb der beiden Randabschnitte 104 des Mantels 102 bzw. der Öffnung 103 je eine Rinne 130, 131 vorgesehen, die sich jeweils parallel zur Zylinderachse L über die Öffnung 103 hinaus erstreckt. Die jeweilige Rinne kann z.B. einen vom Mantel abragenden Boden 130c, 131c aufweisen, von dem eine Seitenwand 130d, 131 d abgeht.

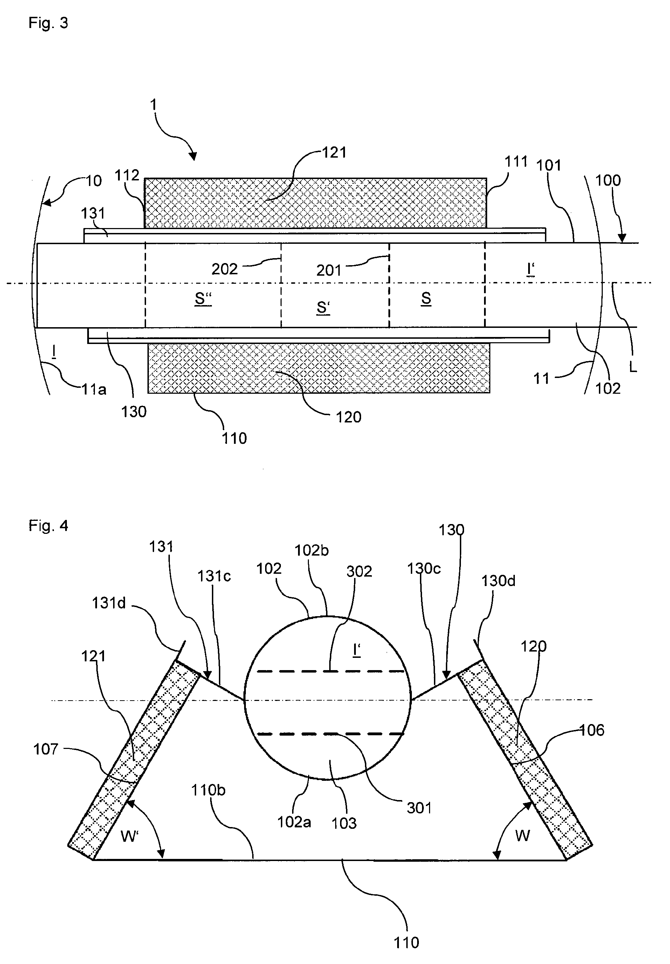

Die Wandungen 111, 112, das Prallelement 110 sowie die beiden Rinnen 130, 131 begrenzen auf beiden Seiten des Rohrleitungsabschnitts 101 je eine laterale Öffnung 106, 107 vor der bevorzugt vollflächig je ein Tropfenabscheider 120, 121 angeordnet ist, so dass das aus der Öffnung 103 austretende Medium M nach Umlenkung durch das Prallelement 110 durch jene lateralen Öffnungen 106, 107 bzw. Tropfenabscheider 120, 121 zwangsgeführt wird. Bei den Tropfenabscheidern 120, 121 handelt es sich bevorzugt um Drahtgestricke. Wie insbesondere Fig. 4 zu entnehmen ist, verlaufen die beiden Tropfenabscheider 120, 121 vorzugsweise geneigt zur Vertikalen, so dass sie jeweils einen spitzen Winkel W bzw. W' mit dem ebenen Prallelement 110 einschließen. Es ist jedoch auch möglich, bei der Ausführungsform gemäß Figur 1 auf jene Tropfenabscheider 120, 121 zu verzichten.

Weiterhin ist vorgesehen, dass die Öffnung 103 bzw. das Prallelement 110 in drei Segmente S, S', S" unterteilt ist. Hierzu sind zwei plattenförmige erste Leitelemente bzw. Leitbleche 201, 202 zum Führen des fluiden Mediums M vorgesehen, die sich jeweils senkrecht zur Zylinderachse L erstrecken und von einer der Öffnung 103 zugewandten Oberseite 110b des Prallelementes 110 abgehen und durch die Öffnung 103 in den Innenraum I' des Rohrleitungsabschnitts 101 bzw. in jene Öffnung 103 hinein stehen. Dabei verlaufen die ersten Leitelement 201, 202 zwischen den beiden Wandungen 111, 112, und zwar parallel zu diesen.

Gemäß dem in den Figuren 1 bis 4 gezeigten Ausführungsbeispiel ist vorgesehen, dass die ersten Leitelemente 201, 202 zusammen mit zwei plattenförmige zweiten Leitelementen 301, 302, die im Innenraum I` des Rohrleitungsabschnitts 101 übereinander sowie horizontal verlaufen, drei Strömungspfade bilden, von denen jeder zu einem Segment S, S', S" führt. Der Stoffstrom M kann somit auf die drei Segmente S, S', S" verteilt werden. Die Strömungspfade sind bevorzugt so gestaltet, dass das Medium M möglichst gleichförmig auf das Prallelement 110 aufgegeben wird.

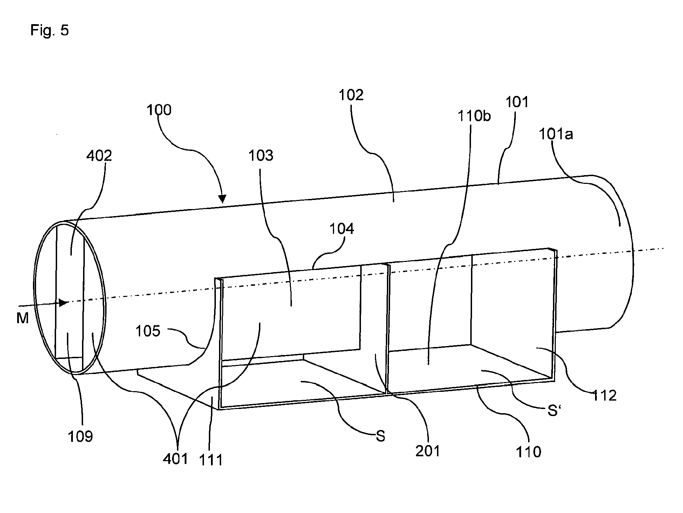

Figur 5 zeigt eine weitere Ausführungsform einer erfindungsgemäßen Einrichtung 1, bei der im Unterschied zu den Figuren 1 bis 4 keine Topfenabscheider 120, 121 sowie Rinnen 130, 131 vorgesehen sind (wobei jedoch auch hier Tropfenabscheider sowie Rinnen vorgesehen sein können, die wie oben beschrieben ausgebildet bzw. angeordnet sein können). Des Weiteren verbreitern sich die beiden Wandungen 111, 112 im Unterschied zu den Figuren 1 bis 4 nach unten hin, d.h., zum Prallelement 110 hin, nicht, sondern weisen parallele vertikale Randabschnitte auf. Ferner ist nur ein erstes Leitelement 201 vorgesehen, dass parallel zu den Wandungen 111, 112 verläuft und mittig zwischen diesen angeordnet ist (sowie ferner senkrecht zum Prallelement 110), so dass das Prallelement 110 bzw. die halbrohrförmige Öffnung 103 in zwei gleich große Segmente S, S' unterteilt ist. Anstelle von horizontalen zweiten Leitelementen bzw. Leitblechen 301, 302, wie in den Figuren 1 bis 4, sind gemäß Figur 5 im Innenraum I des Rohrleitungsabschnitts 101 zwei parallele, entlang der Zylinderachse L erstreckte plattenförmige Leitelemente 401, 402 vorgesehen, die sich jeweils entlang einer vertikalen Erstreckungsebene erstrecken. Die beiden horizontal nebeneinanderliegenden zweiten Leitelemente 401, 402 erstrecken sich dabei entlang der Zylinderachse L ausgehend von einer Einlassöffnung 109 der Rohrleitung 100 bis zu dem in die Öffnung 103 ragenden ersten Leitelement 201, auf das sie rechtwinklig stoßen. Auf diese Weise werden zwei seitliche Strömungspfade geschaffen, die in ein erstes, näher an der Einlassöffnung 109 gelegenes Segment S des Prallelementes 110 führen sowie ein mittiger Strömungspfad zwischen den beiden zweiten Leitelementen 401, 402, der in das benachbarte zweite Segment S' des Prallelementes 110 führt.

**Bezugszeichenliste**

| | |
|---|---|
| 1 | Einrichtung |
| 10 | Behälter (z.B. Abscheider, Kolonne etc.) |
| 11 | Behältermantel |
| 11a | Innenseite Behälter |
| 12 | Lager |
| 100 | Rohrleitung |
| 101 | Rohrleitungsabschnitt |
| 101a | Ende |
| 102 | Mantel |
| 102a | Unterseite |
| 102b | Oberseite |
| 103 | Öffnung |
| 104 | Erste Randabschnitte |
| 105 | Zweite Randabschnitte |
| 106, 107 | Laterale Öffnung |
| 108 | Flansch |
| 109 | Einlassöffnung |
| 110 | Prallelement |
| 110b | Oberseite |
| 111, 112 | Wandungen |
| 120, 121 | Tropfenabscheider |
| 130, 131 | Rinnen |
| 201, 202 | Erste Leitelemente |
| 301, 302, 401, 402 | Zweite Leitelemente |
| W, W' | Winkel |
| M | Stoffstrom/Medium |
| L | Zylinderachse |
| S, S', S" | Segmente |
| I, I' | Innenraum |

## Patentansprüche

1. Einrichtung zum Einleiten eines fluiden Mediums (M) in einen Behälter (10), mit:
- einem Behälter (10), der einen Innenraum (I) des Behälters (10) zur Aufnahme des Mediums (M) begrenzt,
- einer Rohrleitung (100) zum Einleiten des Mediums (M) in den Innenraum (I) des Behälters (10), wobei die Rohrleitung (100) einen im Innenraum (I) des Behälters (10) angeordneten Rohrleitungsabschnitt (101) aufweist, der einen hohlzylindrischen Mantel (102) aufweist, der sich entlang einer Zylinderachse (L) erstreckt und einen Innenraum (I') des Rohrleitungsabschnitts (101) begrenzt,
- wobei der Mantel (102) an einer nach unten gewandten Unterseite (102a) eine Öffnung (103) zum Einleiten des fluiden Mediums (M) in den Innenraum (I) des Behälters (10) aufweist,
- wobei jene Öffnung (103) durch zwei entlang der Zylinderachse (L) erstreckte erste Randabschnitte (104) sowie zwei einander gegenüberliegende, bogenförmige zweite Randabschnitte (105) begrenzt wird, wobei jene bogenförmigen zweiten Randabschnitte (105) die beiden ersten Randabschnitte (104) miteinander verbinden,
**dadurch gekennzeichnet,**
**dass** unterhalb der Öffnung (103) ein an dem Mantel (102) festgelegtes, plattenförmiges Prallelement (110) angeordnet ist, so dass aus der Öffnung (103) austretendes, fluides Medium (M) auf das Prallelement (110) auftrifft.

2. Einrichtung nach Anspruch 1, **dadurch gekennzeichnet, dass** die beiden ersten Randabschnitte (104) zumindest abschnittweise oder durchgängig parallel zur Zylinderachse (L) verlaufen.

3. Einrichtung nach Anspruch 1 oder 2, **dadurch gekennzeichnet, dass** die beiden zweiten Randabschnitte (105) als Kreisbögen ausgebildet sind, insbesondere als Halbkreisbögen.

4. Einrichtung nach einem der vorhergehenden Ansprüche, **dadurch gekennzeichnet, dass** die Zylinderachse (L) bezogen auf einen bestimmungsgemäß angeordneten Behälter (10) parallel zur Horizontalen verläuft.

5. Einrichtung nach einem der vorhergehenden Ansprüche, **dadurch gekennzeichnet, dass** das Prallelement (110) entlang der Horizontalen über die Öffnung (103) oder den Mantel (102) hinaus ragt.

6. Einrichtung nach einem der vorhergehenden Ansprüche, **dadurch gekennzeichnet, dass** das Prallelement (110) über zumindest zwei Wandungen (111, 112) am Mantel (102) festgelegt ist, die jeweils von der Unterseite (102a) des Mantels (102) abragen.

7. Einrichtung nach einem der vorhergehenden Ansprüche, **dadurch gekennzeichnet, dass** im Bereich der Öffnung (103) auf gegenüberliegenden Seiten des Rohrleitungsabschnitts (101) je ein Tropfenabscheider (120, 121), insbesondere je in Form eines Gestricks, vorgesehen ist.

8. Einrichtung nach Anspruch 7, **dadurch gekennzeichnet, dass** die beiden Tropfenabscheider (120, 121) geneigt zur Vertikalen verlaufen, wobei die beiden Tropfenabscheider (120, 121) jeweils einen spitzen Winkel (W, W') mit dem Prallelement (110) einschließen.

9. Einrichtung nach einem der vorhergehenden Ansprüche, **dadurch gekennzeichnet, dass** zum Sammeln einer von oben auf den Rohrleitungsabschnitt (101) herabregnenden flüssigen Phase oberhalb der beiden ersten Randabschnitte (104) jeweils eine entlang der Zylinderachse (L) erstreckte Rinne (130, 131) am Mantel (102) vorgesehen ist.

10. Einrichtung nach Anspruch 9, **dadurch gekennzeichnet, dass** die beiden Rinnen (130, 131) jeweils entlang der Zylinderachse (L) über die Öffnung (103) und/oder die beiden Tropfenabscheider (120, 121) hinaus ragen.

11. Einrichtung nach einem der vorhergehenden Ansprüche, **dadurch gekennzeichnet, dass** ein, zwei oder mehrere plattenförmige erste Leitelemente (201, 202) zum Führen des fluiden Mediums (M) vorgesehen sind, das bzw. die sich jeweils senkrecht zur Zylinderachse (L) erstrecken und von einer der Öffnung (103) zugewandten Oberseite (110b) des Prallelementes (110) abgehen und insbesondere durch jene Öffnung (103) in den Innenraum (I') des Rohrleitungsabschnitts (101) hinein stehen, wobei insbesondere das erste Leitelement (201) bzw. die ersten Leitelemente (201, 202) parallel zu jenen Wandungen (111, 112) verlaufen, über die das Prallelement (110) am Mantel (102) festgelegt ist.

12. Einrichtung nach einem der vorhergehenden Ansprüche, **dadurch gekennzeichnet, dass** im Innenraum (I') des Rohrleitungsabschnitts (101) zum Führen des fluiden Mediums (M) ein, zwei oder mehrere plattenförmige zweite Leitelemente (301, 302) vorgesehen sind, die jeweils in einer horizontalen Ebene liegen.

13. Einrichtung nach einem der Ansprüche 1 bis 12, **dadurch gekennzeichnet, dass** im Innenraum (I') des Rohrleitungsabschnitts (101) zum Führen des fluiden Mediums (M) ein, zwei oder mehrere plattenförmige zweite Leitelemente (401, 402) vorgesehen sind, die jeweils in einer vertikalen Ebene liegen sowie parallel zur Zylinderachse (L) angeordnet sind.
